# EUROPÄISCHE PATENTSCHRIFT

(11) **EP 4 582 720 B1**
(45) Veröffentlichungstag und Bekanntmachung des Hinweises auf die Patenterteilung: **03.06.2026**
(21) Anmeldenummer: 24220884.1
(22) Anmeldetag: 18.12.2024
(51) Int. Cl.: F16H 61/04, F16H 59/40

(54) **VERFAHREN ZUR ANSTEUERUNG EINES FAHRANTRIEBS**
METHOD FOR CONTROLLING A DRIVE
PROCÉDÉ DE COMMANDE D'UN ENTRAÎNEMENT DE ROULEMENT

(30) Priorität: 03.01.2024 DE 102024200038
(43) Veröffentlichungstag der Anmeldung: 09.07.2025
(73) Patentinhaber: Robert Bosch GmbH, 70442 Stuttgart (DE)
(72) Erfinder: Hellebrandt, Marco, 44388 Dortmund (DE); Weir, Dennis, 44135 Dortmund (DE); Jerg, Matthias, 89233 Neu-Ulm (DE)

(56) Entgegenhaltungen:
- DE-A1- 102018 009 704
- DE-A1- 102019 206 829
- DE-B4- 102014 219 099

## Beschreibung

### TECHNISCHER BEREICH

Die Erfindung betrifft ein Verfahren zur Ansteuerung eines Antriebs einer Arbeitsmaschine. Darüber hinaus betrifft diese Erfindung eine Steuereinheit, eine Arbeitsmaschine, die die Steuereinheit umfasst und ein Computerprogramm sowie ein maschinenlesbares Speichermedium.

### STAND DER TECHNIK

In der Entwicklung von Schaltgetrieben, insbesondere solchen, die ohne Reibkupplungen arbeiten und eine aktive Synchronisation, speziell bei elektrischen Antrieben, verwenden, spielt die Drehzahlsynchronisation eine zentrale Rolle. Der Prozess des Gangwechsels erfordert eine präzise Abstimmung der Drehzahlen, um einen reibungslosen Übergang zwischen den Gängen zu gewährleisten.

Der Ablauf dieses Vorgangs umfasst verschiedene entscheidende Schritte.

Zunächst erfolgt die kontinuierliche Messung der Drehzahl am Getriebeabtrieb, was als Grundlage für den gesamten Synchronisationsprozess dient. Diese Messungen sind essenziell, um Echtzeitdaten über die momentane Drehzahl am Ausgang des Getriebes zu erhalten.

Die gemessene Drehzahl am Getriebeabtrieb wird im Anschluss präzise in die Zieldrehzahl des Getriebeantriebs im gewünschten Gang umgerechnet. Diese Umrechnung ist von großer Bedeutung, da sie die Drehzahl bestimmt, die für einen reibungslosen Übergang in den angestrebten Gang erforderlich ist.

Anschließend wird diese errechnete Zieldrehzahl dem Antriebsmotor übermittelt. Der Motor erhält somit die Anweisung, die Drehzahl entsprechend zu regulieren, um die notwendige Geschwindigkeit für den gewünschten Gang zu erreichen.

Das Einlegen des Ganges erfolgt erst dann, wenn die gemessene Drehzahldifferenz zwischen Antrieb und Getriebeausgang den vorgegebenen Sollbereich erreicht. Dies stellt sicher, dass der Gang nur dann eingelegt wird, wenn die Drehzahlen entsprechend synchronisiert sind, um ein reibungsloses Schalten zu gewährleisten.

Diese präzisen und hochregulierten Vorgänge ermöglichen eine effiziente Leistungsübertragung und tragen dazu bei, Verschleiß und Schäden am Getriebe zu minimieren. Die Verwendung solcher synchronisierten Mechanismen gewährleistet nicht nur einen komfortablen Fahrkomfort, sondern trägt auch zur Langlebigkeit und optimalen Funktionalität des Getriebes bei.

Zwischen der Messung der Abtriebsdrehzahl und dem Einstellen der Antriebsdrehzahl besteht oft ein Zeitversatz, der im Kontext eines Schaltgetriebes problematisch werden kann. Die Problematik entsteht durch Fahrwiderstände, die das Fahrzeug beschleunigen oder bremsen und damit die Abtriebsdrehzahl verändern.

Während dieses Zeitfensters führen die Drehzahländerungen dazu, dass die Drehzahlen auseinanderlaufen. Dies wiederum lässt die Differenzdrehzahl größer oder kleiner werden als es für einen reibungslosen Gangwechsel erforderlich ist. Diese Diskrepanz stellt beim Einkuppeln eine Herausforderung dar.

Jedoch ist es möglich, diese Problematik mindestens teilweise zu mildern. Eine Möglichkeit besteht darin, die fahrwiderstandsabhängige Beschleunigung oder Bremsung zu kompensieren. Dieser Kompensationsmechanismus zielt darauf ab, die Veränderungen in der Abtriebsdrehzahl, die durch Fahrwiderstände entstehen, zu antizipieren und auszugleichen. Allerdings ist es aktuell noch nicht möglich durch eine Antizipierung einer solchen Kompensation das Problem komplett zu verhindern, da die verschiedenen Betriebszustände sehr schwierig zu prädizieren sind.

Das Dokument DE102018009704A1 betrifft ein Verfahren zum Lernen einer Synchronposition eines in mehrere Gangstellerpositionen bewegbaren Gangstellers eines Doppelkupplungsgetriebes.

Das Dokument DE102019206829A1 betrifft eine Erntemaschine mit einem Antriebsmotor, der über einen ersten Antriebsstrang mit Bodeneingriffsmitteln und über einen zweiten Antriebsstrang mit Erntegutbearbeitungs- und/oder -fördermitteln verbunden ist, und mit einer Steuerung, die mit einem Aktor zur Kontrolle der Vortriebsgeschwindigkeit verbunden ist. Die Steuerung ist eingerichtet, anhand vom Erntegutdurchsatz abhängiger Soll- und Istwerte ein Beschleunigungssignal zu berechnen, das eine zum Minimieren des Unterschieds zwischen Soll- und Istwert geeignete Beschleunigung der Erntemaschine repräsentiert, und basierend auf dem Beschleunigungssignal ein Stellsignal zur Ansteuerung des Aktors zu bestimmen.

Das Dokument DE102014219099B4 betrifft ein Verfahren zur Schaltsteuerung eines automatisierten Schaltgetriebes in einem elektromotorisch angetriebenen Fahrzeug, bei dem das Schaltgetriebe zumindest eine unsynchronisierte Schaltkupplung aufweist, bei dem eine Eingangswelle des Schaltgetriebes mit einer motorisch und generatorisch betreibbaren Elektromaschine verbunden oder verbindbar ist, wobei bei Schaltungen der Schaltkupplung eine Synchronisierung einer

Eingangsdrehzahl zu einer Ausgangsdrehzahl mittels der Elektromaschine erfolgt, wobei ein Zieldrehzahlfenster für die Eingangsdrehzahl bestimmt wird, und wobei das Einkuppeln der Schaltkupplung bewirkt wird, wenn die Eingangsdrehzahl innerhalb des Zieldrehzahlfensters liegt.

Es ist daher Aufgabe der vorliegenden Erfindung ein Verfahren zu entwickeln, das ermöglichen kann, diese Diskrepanz beim Einkuppeln zu eliminieren und zu ermöglichen, dass immer sichergestellt werden kann, dass das Schalten ohne Problem bei der Drehzahlsynchronisation ausgeführt werden kann.

### KURZFASSUNG

Die hier genannte Aufgabe wird durch ein Verfahren nach Anspruch 1 gelöst. Eine Ausführungsform der vorliegenden Erfindung betrifft ein Verfahren zur Ansteuerung eines Fahrantriebes (1) einer mobilen Arbeitsmaschine, wobei der Fahrantrieb eine elektrische Antriebsmaschine (4) und eine Getriebeanordnung (3) umfasst, wobei die Getriebeanordnung (3) ein Schaltgetriebe (6) umfasst, das mindestens zwei Getriebestufen (46, 48) aufweist, wobei das Schaltgetriebe über eine Eingangswelle (18) mit der Antriebsmaschine (4) koppelbar oder gekoppelt ist, so dass ein Drehmoment übertragbar ist, und wobei das Schaltgetriebe über eine Ausgangswelle (22) mit einem Abtrieb der mobilen Arbeitsmaschine verbindbar oder verbunden ist, wobei das Verfahren folgende Schritte umfasst;
a. Erhalten eines Befehls (der automatisch oder durch einen Fahrer erzeugt werden kann), das Schaltgetriebe von einer ersten zu einer zweiten Getriebestufe zu schalten (es ist für diese Erfindung nicht relevant, ob die erste oder die zweite Getriebestufe eine höhere oder eine niedrige Übersetzung verursachen);
b. Erfassen einer Größe, die eine aktuelle Fahrgeschwindigkeit der mobilen Arbeitsmaschine ist oder von der Fahrgeschwindigkeit abhängig ist (z.B. eine Drehzahl der Ausgangswelle, eine Drehzahl eines Rades usw.);
c. Berechnen eines Gradienten, der im Schritt b. erfassten Größe;
d. Berechnen einer Drehzahlabweichung auf Basis des im Schritt c. berechneten Gradienten;
e. Ermitteln einer Soll-Drehzahl der elektrischen Antriebsmaschine (4) auf Basis der im Schritt b. berechneten Drehzahlabweichung;
f. Schalten des Schaltgetriebes von der ersten zu der zweiten Getriebestufe unter Berücksichtigung der im Schritt e. ermittelten Soll-Drehzahl (es ist nicht notwendig, dass die Drehzahl der elektrischen Antriebsmaschine tatsächlich die Soll-Drehzahl erreichen soll, da entschieden werden kann, dass bestimmte Diskrepanzen zwischen Soll-Drehzahl und Ist-Drehzahl akzeptabel sind und für solche Fälle könnte die elektrische Antriebsmaschine gar nicht angesteuert werden oder könnte angesteuert werden, bis wann der Unterschied zwischen Soll- und Ist-Drehzahl kleiner als ein vorgegebener Schwellenwert ist).

Durch diese Kompensation werden automatisch die fahrwiderstandsabhängigen Drehzahlveränderungen, die durch Fahrwiderstände verursacht werden, kompensiert, sodass die Drehzahl wieder in den akzeptablen Sollbereich zurückgeführt werden kann. Dadurch wird ein reibungsloseres Einkuppeln ermöglicht, da die Drehzahlen des Antriebs und des Getriebeabtriebs synchronisiert sind. Es ist nicht erforderlich, dass die Schritte a. bis f. hintereinander ausgeführt werden. Insbesondere kann der Schritt a. nach einem der Schritte b. bis e. ausgeführt werden.

Diese Kompensationsmechanismen sind entscheidend, um die Herausforderungen, die durch die zeitliche Verzögerung zwischen der Drehzahlmessung und der Anpassung der Antriebsdrehzahl entstehen, zu bewältigen. Sie tragen dazu bei, die Präzision und Effektivität des Gangwechsels in Schaltgetrieben, insbesondere bei elektrischen Antrieben ohne Reibkupplungen, zu verbessern.

Ferner betrifft die vorliegende Erfindung eine Steuereinheit nach Anspruch 9, ein Computerprogramm nach Anspruch 11 sowie ein maschinenlesbares Speichermedium nach Anspruch 12.

Bevorzugte Ausführungsformen der vorliegenden Erfindung sind in den abhängigen Ansprüchen definiert.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Fig. 1 zeigt einen Schaltplan eines Fahrantriebes gemäß dem Stand der Technik,
Fig. 2 zeigt ein Verfahren zur Ansteuerung eines Fahrantriebes einer mobilen Arbeitsmaschine gemäß einer Ausführungsform der vorliegenden Erfindung;

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

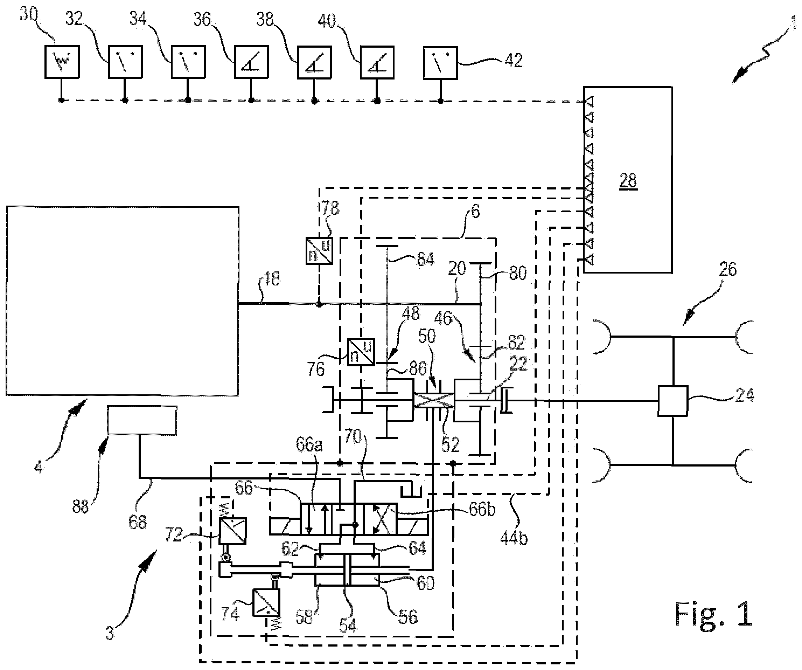

Gemäß Figur 1 hat ein Fahrantrieb 1, beispielsweise der einer mobilen Arbeitsmaschine, eine Getriebeanordnung 3 mit einer als Elektromotor ausgebildeten Antriebsmaschine 2 und einem im Ausführungsbeispiel zweistufigen Schaltgetriebe 6. Eine Triebwelle 18 der Antriebsmaschine ist mit einer Eingangswelle 20 des Schaltgetriebes 6 gekoppelt. Eine Ausgangswelle 22 des Schaltgetriebes 6 ist mit einem Differenzial 24 einer zweirädrigen Achse 26 des Fahrantriebs 1 gekoppelt.

Des Weiteren hat die Getriebeanordnung 3 eine Steuereinrichtung 28. Mit der Steuereinrichtung 28 signalverbunden sind eine Schaltanforderungseinrichtung 30, eine Gangwahleinrichtung 32, eine Fahrtrichtungswahleinrichtung 34, ein Fahrpedal 36, eine Kriechgangwahleinrichtung 38, ein Bremspedal 40 und eine Automatikwahleinrichtung 42. Alle genannten Einrichtungen 30 bis 42 sind über einen CAN-Bus signalverbunden.

Das Schaltgetriebe 6 hat eine erste Getriebestufe 46 mit einer kleinen Übersetzung und eine zweite Getriebestufe 48 mit einer größeren Übersetzung der Drehzahl nA der Ausgangswelle 22 zur Drehzahl nE der Eingangswelle 18.

Des Weiteren hat das Schaltgetriebe 6 eine Klauenkupplung 50, die synchronringlos ausgestaltet ist. Ein Aktuator 52 der Klauenkupplung 50 ist starr mit einem Kolben 54 eines Stellzylinders 56 gekoppelt. Letztgenannter hat zwei gleiche, vom Kolben 54 getrennte Druckmittelräume 58, 60, die über Steuerleitungen 62, 64 mit einem elektromagnetisch betätigbaren 4/3-Schaltventil 66 verbunden sind.

Letztgenanntes weist eine erste Schaltstellung 66a auf, in der der erste Druckraum 58 mit einer Druckmittelleitung 68 und der zweite Druckraum 60 mit einer Tankleitung 70 verbunden ist. In einer zweiten Schaltstellung 66b ist der zweite Druckmittelraum 60 mit der Druckmittelleitung 68 und der erste Druckmittelraum 58 mit der Tankleitung 70 verbunden. Die erste Schaltstellung 66a bewirkt dabei ein Verschieben des Kolbens 54 derart, dass über die Klauenkupplung 50 die erste Getriebestufe 46 eingelegt wird, die zweite Schaltstellung 66b bewirkt, dass über den Kolben 54 und die Klauenkupplung 50 die zweite Getriebestufe 48 eingelegt wird.

Das 4/3-Schaltventil 66 und der Stellzylinder 56 sind zu einer Einheit zusammengefasst. Diese Einheit weist zudem zwei Endlagenschalter 72, 74 auf, über die anhand der Position des Kolbens 54 das erfolgreiche Schalten der jeweiligen Getriebestufe 46, 48 erkannt werden kann. Beide Endlagenschalter 72, 74 sind jeweils über eine Signalleitung mit der Steuereinrichtung 28 verbunden. Das 4/3-Wegeschaltventil 66 ist über die Druckmittelleitung 68 mit einer Druckquelle 88 (wie z.B. eine Speisepumpe) verbunden.

Die Getriebeanordnung 3 ist dabei derart ausgestaltet, dass das Schaltgetriebe 6 während des Fahrbetriebs schaltbar ist. Das Schalten oder Wechseln der Getriebestufen 46, 48 ist über die Steuereinrichtung 28 automatisiert steuerbar. Zu diesem Zweck weist die Getriebeanordnung 3 einen Drehzahlsensor 76 auf, über den die Drehzahl nA der Ausgangswelle 22 erfassbar ist. Zudem weist sie einen Drehzahlsensor 78 zur Erfassung der Drehzahl nE der Eingangswelle 18 auf.

Die erste Getriebestufe 46 hat ein fest mit der Eingangswelle 20 gekoppeltes Zahnrad 80, das in permanentem Eingriff mit einem über die Klauenkupplung 50 mit der Ausgangswelle 22 koppelbaren Losrad 82 ist. Entsprechend weist die zweite Getriebestufe 48 ein fest mit der Eingangswelle 20 gekoppeltes Zahnrad 84 und ein damit dauerhaft in Eingriff befindliches, über die Klauenkupplung 50 mit der Ausgangswelle 22 koppelbares Losrad 86 auf.

Wie in Figur 1 zu sehen ist, kann die Steuereinheit 28 zusätzlich eine Mehrzahl von Ein-bzw. Ausgängen umfassen, die jeweils mit zusätzlichen Sensoren oder Aktuatoren verbunden werden kann.

Es wird darauf hingewiesen, dass Figur 1 nur ein Ausführungsbeispiel ist und dass die vorliegende Erfindung (wie klar aus der Beschreibung wird) auch bei anderen Arten von Schaltgetrieben angewendet werden kann. Insbesondere kann ein Aktuator benutzt werden, der elektrisch betrieben wird und dazu dient, eine Schaltgabel durch die Bewegung einer Spindel oder Mutter zu betätigen. In diesem Fall erfolgt die Bewegung der Schaltgabel durch eine Spindel oder Mutter, die vom elektrischen Aktuator angetrieben wird.

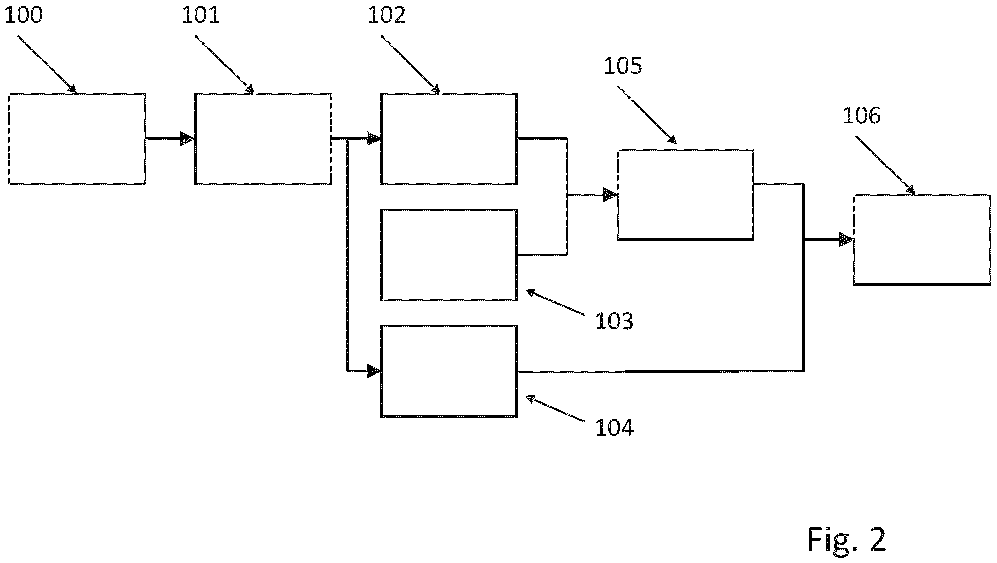

Es wird nun mit Bezug auf den Figuren 1 und 2 ein Verfahren zur Ansteuerung eines Fahrantriebes einer mobilen Arbeitsmaschine beschrieben, der in Figur 1 dargestellt ist.

In einem ersten Schritt wird ein Befehl erhalten, das Schaltgetriebe von einer ersten zu einer zweiten Getriebestufe zu schalten (in diesem Fall kann die erste Getriebestufe mit dem Bezugszeichen 46 und die zweite Getriebestufe mit dem Bezugszeichen 48 gekennzeichnet werden. Dieses Verfahren funktioniert auch natürlich auch für den Fall, dass die erste Getriebestufe die 48 und die zweite Getriebestufe die 46 ist.

Es wird darauf hingewiesen, dass der Befehl entweder automatisch, z.B. durch eine Steuereinheit, die ein atomistisches Schalten zwischen der ersten und der zweiten Getriebestufe erfordert, oder manuell, z.B. durch einen Fahrer, erstellt werden kann.

In einem zweiten Schritt 100 wird eine Größe erfasst, die eine aktuelle Fahrgeschwindigkeit der mobilen Arbeitsmaschine ist oder von der Fahrgeschwindigkeit abhängig ist. Diese Größe kann z.B. eine Drehzahl nA der Ausgangswelle 22 oder eines Rades der zweirädrigen Achse 26 sein. Vorzugsweise wird die Größe nach der Erfassung (bzw. Messung) durch einen Filter 101 geglättet, um eine klarere Gradientenbildung zu ermöglichen.

In einem weiteren Schritt 102 wird der Gradient der erfassten Größe (Abtriebsdrehzahl) berechnet. Insbesondere wird ein Differenzenquotient 1. Ordnung berechnet.

Parallel wird eine geschätzte Totzeit zwischen Messen und Stellen ermittelt 103. Diese Ermittlung kann entweder online oder offline ermittelt werden. Diese Totzeit (oder auch als "Latenz" bekannt) beschreibt wie viel Zeit der Fahrantrieb brauchen wird, bis wann tatsächlich die Getriebestufe geschaltet wird. Der Grund dafür ist, dass es bestimmte Komponenten gibt, die bei der Schaltung eine Rolle spielen. Z.B. wird zuerst eine bestimmte Zeit gebraucht, bis wann das elektromagnetische 4/3-Schaltventil 66 das Betätigungssignal erhalten wird. Insbesondere, da gemäß einer Ausführungsform der vorliegenden Erfindung die elektrische Antriebsmaschine 4 angesteuert wird, wird ein bestimmtes Zeitfenster gebraucht, bis wann die Ansteuerung tatsächlich erfolgt, da verschiedene Komponenten dabei eine Rolle spielen: Inverter, Elektromotor, Steuereinheit.

Als Beispiel kann ein erstes Zeitfenster für die Steuereinheit 28 (bzw. Getriebesteuergerät) berücksichtigt werden. Dieses erste Zeitfenster kann z.B. 10ms betragen. Ein zweites Zeitfenster kann für die Inverter-Steuerungsnachricht berücksichtigt werden. Dieses zweite Zeitfenster kann auch z.B. 10ms betragen. Ein drittes Zeitfenster kann für das Inverter-Kommunikationsmodul berücksichtigt werden. Dieses drittes Zeitfenster kann auch z.B. 10ms betragen. Darüber hinaus kann auch die Reaktionszeit (z.B. 3ms) der elektrischen Antriebseinheit 4 berücksichtigt werden.

In dem Schritt 105 werden dann die Informationen aus den Schritten 102 und 103 kombiniert. Insbesondere wird eine Drehzahlabweichung durch eine Multiplikation des im Schritt 102 berechneten Gradienten und der im Schnitt 103 geschätzten Totzeit berechnet.

Parallel werden bei dem Schritt 104 eine aktuelle Drehzahl der Ausgangswelle 22 und eine Änderung des Übersetzungsverhältnisses durch die zweite Getriebestufe berücksichtigt, um eine nicht angepasste Soll-Drehzahl für die elektrische Antriebsmaschine zu berechnen. Im Grunde genommen entspricht der Schritt 104 dem Verfahren nach dem Stand der Technik.

Die nicht angepasste Soll-Drehzahl wird nun im Schritt 106 mit der Drehzahlabweichung kombiniert, sodass eine tatsächliche Soll-Drehzahl der elektrischen Antriebsmaschine 4 auf Basis der im Schritt 105 berechneten Drehzahlabweichung und der im Schritt 104 berechneten nicht angepasste Soll-Drehzahl ermittelt wird. Insbesondre wird die tatsächliche Soll-Drehzahl aus einer Summe der nicht angepassten Soll-Drehzahl und der der Drehzahlabweichung ermittelt.

Schließlich wird ein Schalten des Schaltgetriebes von der ersten zu der zweiten Getriebestufe unter Berücksichtigung der im Schritt 106 ermittelten Soll-Drehzahl durchgeführt.

Es ist für die Erfindung nicht relevant, wann die ganzen Berechnungen für die Ermittlung der Soll-Drehzahl ausgeführt werden. Die Berechnungen könnten z.B. dauerhaft ausgeführt werden, sodass, wenn umgeschaltet werden soll, die Soll-Drehzahl bereits ermittelt wurde. Alternativ ist auch besonders vorteilhaft, dass die Ermittlung der Soll-Drehzahl während des Schaltvorgangs, bspw. während des Auslegens, ausgeführt wird, um nicht auf die Berechnung warten zu müssen, um zu schalten.

Gemäß einer Ausführungsform der vorliegenden Erfindung wird bei der genannten Durchführung des Schaltens die elektrische Antriebsmaschine 4 auf Basis der im Schritt 106 ermittelten Soll-Drehzahl angesteuert. Das bedeutet, dass zuerst die elektrische Antriebsmaschine 4 angesteuert wird und vorzugsweise, nachdem die elektrische Antriebsmaschine 4 die Soll-Drehzahl erreicht hat (oder wenn der Unterschied zwischen Soll- und Ist-Drehzahl kleiner als ein vorgegebener Schwellenwert ist) tatsächlich geschaltet wird.

Gemäß einer weiteren Ausführungsform der vorliegenden Erfindung wird zuerst geschaut, ob sich die im Schritt 106 ermittelte Soll-Drehzahl stark von der aktuellen Drehzahl unterscheidet. Falls der Unterschied kleiner ist als ein vorgegebener Wert, wird das Schalten ohne aktive Ansteuerung der elektrischen Antriebsmaschine 4 ausgeführt.

Das beschriebene Verfahren ist in der Speichereinheit abgelegt und wird durch die Steuereinheit 28 ausgeführt.

Das beschriebene Verfahren kann in verschiedenen Arten von Arbeitsmaschinen benutzt werden. Im Wesentlichen kann das Verfahren bei allen Arbeitsmaschinen benutzt werden, die einen elektrischen Antrieb aufweisen. Anwendungsbeispiele können z.B. ein Bagger, ein Telehandler, ein Feldhäcksler, ein Mähdrescher, eine Schneefräse, eine Straßenfräse sein.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung innerhalb des Bereichs der beigefügten Ansprüche zu realisieren, ohne von dem Schutzbereich der Erfindung abzuweichen.

Dementsprechend soll die Erfindung nicht durch die spezifischen veranschaulichenden Ausführungsformen beschränkt sein, sondern nur durch den Schutzbereich der beigefügten Ansprüche.

## Patentansprüche

1. Verfahren zur Ansteuerung eines Fahrantriebes (1) einer mobilen Arbeitsmaschine, wobei der Fahrantrieb eine elektrische Antriebsmaschine (4) und eine Getriebeanordnung (3) umfasst, wobei die Getriebeanordnung (3) ein Schaltgetriebe (6) umfasst, das mindestens zwei Getriebestufen (46, 48) aufweist, wobei das Schaltgetriebe über eine Eingangswelle (18) mit der Antriebsmaschine (4) koppelbar oder gekoppelt ist, so dass ein Drehmoment übertragbar ist, und wobei das Schaltgetriebe über eine Ausgangswelle (22) mit einem Abtrieb der mobilen Arbeitsmaschine verbindbar oder verbunden ist, wobei das Verfahren folgende Schritte umfasst;
a. Erhalten eines Befehls, das Schaltgetriebe von einer ersten zu einer zweiten Getriebestufe zu schalten;
b. Erfassen einer Größe, die eine aktuelle Fahrgeschwindigkeit der mobilen Arbeitsmaschine ist oder von der Fahrgeschwindigkeit abhängig ist;
c. Berechnen eines Gradienten, der im Schritt b. erfassten Größe;
d. Berechnen einer Drehzahlabweichung auf Basis des im Schritt c. berechneten Gradienten;
e. Ermitteln einer Soll-Drehzahl der elektrischen Antriebsmaschine (4) auf Basis der im Schritt b. berechneten Drehzahlabweichung;
f. Durchführen eines Schaltens des Schaltgetriebes von der ersten zu der zweiten Getriebestufe unter Berücksichtigung der im Schritt e. ermittelten Soll-Drehzahl.

2. Verfahren nach Anspruch 1, wobei zwischen den Schritten e. und f. die elektrische Antriebsmaschine auf Basis der im Schritt e. ermittelten Soll-Drehzahl angesteuert wird.

3. Verfahren nach Anspruch 2, wobei im Schritt f. geschaltet wird, nachdem die elektrische Antriebsmaschine (4) die Soll-Drehzahl erreicht hat.

4. Verfahren nach einem der Ansprüche 1 bis 3, wobei in dem Schritt d. die Drehzahlabweichung weiterhin auf Basis einer geschätzten Totzeit berechnet wird.

5. Verfahren nach Anspruch 4, wobei die geschätzte Totzeit mindestens eine zwischen einer von einem Getriebesteuergerät versursachten Zeitverzögerung, einer von einem Inverter versursachten Zeitverzögerung und/oder einer Reaktionszeit der elektrischen Antriebsmaschine, ist.

6. Verfahren nach einem der Ansprüche 4 oder 5, wobei die Drehzahlabweichung durch eine Multiplikation des im Schritt c. berechneten Gradienten und der geschätzten Totzeit berechnet wird.

7. Verfahren nach einem der Ansprüche 1 bis 6, wobei in dem Schritt e. für die Ermittlung der Soll-Drehzahl der elektrischen Antriebsmaschine (4) weiterhin eine aktuelle Drehzahl der Ausgangswelle (22) und eine Änderung des Übersetzungsverhältnis durch die zweite Getriebestufe berücksichtigt werden.

8. Verfahren nach einem der Ansprüche 1 bis 7, wobei mindestens einer der Schritte b. bis e. vor dem Schritt a. ausgeführt werden.

9. Steuereinheit (68) für eine Arbeitsmaschine (4), die einen Fahrantrieb (1) umfasst, wobei der Fahrantrieb eine elektrische Antriebsmaschine (4) und eine Getriebeanordnung (3) umfasst, wobei die Getriebeanordnung (3) ein Schaltgetriebe (6) umfasst, das mindestens zwei Getriebestufen (46, 48) aufweist, wobei das Schaltgetriebe über eine Eingangswelle (18) mit der Antriebsmaschine (4) koppelbar oder gekoppelt ist, so dass ein Drehmoment übertragbar ist, und wobei das Schaltgetriebe über eine Ausgangswelle (22) mit einem Abtrieb der mobilen Arbeitsmaschine verbindbar oder verbunden ist, wobei die Ausgangswelle (22) mit mindestens einem anzutreibenden Rad oder einer anzutreibenden Kette oder Achse verbindbar oder verbunden sind, wobei die Steuereinheit (68) eingerichtet ist, ein Verfahren nach einem der Ansprüche 1 bis 8 auszuführen.

10. Arbeitsmaschine, die einen Fahrantrieb (1) umfasst, wobei der Fahrantrieb eine elektrische Antriebsmaschine (4) und eine Getriebeanordnung (3) umfasst, wobei die Getriebeanordnung (3) ein Schaltgetriebe (6) umfasst, das mindestens zwei Getriebestufen (46, 48) aufweist, wobei das Schaltgetriebe über eine Eingangswelle (18) mit der Antriebsmaschine (4) koppelbar oder gekoppelt ist, so dass ein Drehmoment übertragbar ist, und wobei das Schaltgetriebe über eine Ausgangswelle (22) mit einem Abtrieb der mobilen Arbeitsmaschine verbindbar oder verbunden ist, wobei die Ausgangswelle (22) mit mindestens einem anzutreibenden Rad oder einer anzutreibenden Kette oder Achse verbindbar oder verbunden sind, wobei die Arbeitsmaschine eine Steuereinheit nach Anspruch 9 umfasst.

11. Computerprogramm, das dazu eingerichtet ist, das Verfahren nach einem der Ansprüche 1 bis 8 auszuführen und/oder zu steuern.

12. Maschinenlesbares Speichermedium mit einem darauf gespeicherten Computerprogramm nach Anspruch 11.

## Claims

1. Method for controlling a drive (1) of a mobile work machine, wherein the drive comprises an electric drive machine (4) and a gear arrangement (3), wherein the gear arrangement (3) comprises a change-speed gearbox (6) which has at least two gear stages (46, 48), wherein the change-speed gearbox is couplable or coupled via an input shaft (18) to the drive machine (4), so that a torque is transmittable, and wherein the change-speed gearbox is connectable or connected via an output shaft (22) to an output drive of the mobile work machine, wherein the method comprises the following steps;
a. Receiving a command to shift the change-speed gearbox from a first to a second gear stage;
b. Detecting a variable that is a current travel speed of the mobile work machine or is dependent on the travel speed;
c. Calculating a gradient of the variable detected in step b.;
d. Calculating a rotational speed deviation on the basis of the gradient calculated in step c.;
e. Determining a target rotational speed of the electric drive machine (4) on the basis of the rotational speed deviation calculated in step b.;
f. Performing a shift of the change-speed gearbox from the first to the second gear stage, taking into account the target rotational speed determined in step e.

2. Method according to Claim 1, wherein between steps e. and f., the electric drive machine is controlled on the basis of the target rotational speed determined in step e.

3. Method according to Claim 2, wherein the shift in step f. is performed after the electric drive machine (4) has reached the target rotational speed.

4. Method according to one of Claims 1 to 3, wherein in step d. the rotational speed deviation is further calculated on the basis of an estimated dead time.

5. Method according to Claim 4, wherein the estimated dead time is at least one of a time delay caused by a gearbox control unit, a time delay caused by an inverter, and/or a reaction time of the electric drive machine.

6. Method according to Claim 4 or 5, wherein the rotational speed deviation is calculated by a multiplication of the gradient calculated in step c. and the estimated dead time.

7. Method according to one of Claims 1 to 6, wherein in step e. for the determination of the target rotational speed of the electric drive machine (4), a current rotational speed of the output shaft (22) and a change in the transmission ratio by the second gear stage are further taken into account.

8. Method according to one of Claims 1 to 7, wherein at least one of steps b. to e. is executed before step a.

9. Control unit (68) for a work machine (4), which comprises a drive (1), wherein the drive comprises an electric drive machine (4) and a gear arrangement (3), wherein the gear arrangement (3) comprises a change-speed gearbox (6) which has at least two gear stages (46, 48), wherein the change-speed gearbox is couplable or coupled via an input shaft (18) to the drive machine (4), so that a torque is transmittable, and wherein the change-speed gearbox is connectable or connected via an output shaft (22) to an output drive of the mobile work machine, wherein the output shaft (22) is connectable or connected to at least one wheel to be driven or one chain or axle to be driven, wherein the control unit (68) is arranged to execute a method according to one of Claims 1 to 8.

10. Work machine, which comprises a drive (1), wherein the drive comprises an electric drive machine (4) and a gear arrangement (3), wherein the gear arrangement (3) comprises a change-speed gearbox (6) which has at least two gear stages (46, 48), wherein the change-speed gearbox is couplable or coupled via an input shaft (18) to the drive machine (4), so that a torque is transmittable, and wherein the change-speed gearbox is connectable or connected via an output shaft (22) to an output drive of the mobile work machine, wherein the output shaft (22) is connectable or connected to at least one wheel to be driven or one chain or axle to be driven, wherein the work machine comprises a control unit according to Claim 9.

11. Computer program which is arranged to execute and/or to control the method according to one of Claims 1 to 8.

12. Machine-readable storage medium with a computer program according to Claim 11 stored thereon.

## Revendications

1. Procédé de commande d'un entraînement de roulement (1) d'une machine de travail mobile, dans lequel l'entraînement de roulement comprend une machine d'entraînement électrique (4) et un agencement de transmission (3), dans lequel l'agencement de transmission (3) comprend une boîte de vitesses (6) qui présente au moins deux rapports de transmission (46, 48), dans lequel la boîte de vitesses est apte à être accouplée ou est accouplée par l'intermédiaire d'un arbre d'entrée (18) à la machine d'entraînement (4), de sorte qu'un couple peut être transmis, et dans lequel la boîte de vitesses est apte à être reliée ou est reliée par l'intermédiaire d'un arbre de sortie (22) à une sortie de la machine de travail mobile, le procédé comprenant les étapes suivantes ;
a. Réception d'un ordre de commuter la boîte de vitesses d'un premier à un deuxième rapport de transmission ;
b. Saisie d'une grandeur qui est une vitesse de déplacement actuelle de la machine de travail mobile ou qui dépend de la vitesse de déplacement ;
c. Calcul d'un gradient de la grandeur saisie à l'étape b. ;
d. Calcul d'un écart de vitesse de rotation sur la base du gradient calculé à l'étape c.;
e. Détermination d'une vitesse de rotation de consigne de la machine d'entraînement électrique (4) sur la base de l'écart de vitesse de rotation calculé à l'étape b. ;
f. Exécution d'une commutation de la boîte de vitesses du premier au deuxième rapport de transmission en tenant compte de la vitesse de rotation de consigne déterminée à l'étape e.

2. Procédé selon la revendication 1, dans lequel, entre les étapes e. et f., la machine d'entraînement électrique est commandée sur la base de la vitesse de rotation de consigne déterminée à l'étape e.

3. Procédé selon la revendication 2, dans lequel, à l'étape f., la commutation est effectuée après que la machine d'entraînement électrique (4) a atteint la vitesse de rotation de consigne.

4. Procédé selon l'une des revendications 1 à 3, dans lequel, à l'étape d., l'écart de vitesse de rotation est en outre calculé sur la base d'un temps mort estimé.

5. Procédé selon la revendication 4, dans lequel le temps mort estimé est au moins un parmi un retard dû à une unité de commande de boîte de vitesses, un retard dû à un onduleur et/ou un temps de réaction de la machine d'entraînement électrique.

6. Procédé selon la revendication 4 ou 5, dans lequel l'écart de vitesse de rotation est calculé par une multiplication du gradient calculé à l'étape c. et du temps mort estimé.

7. Procédé selon l'une des revendications 1 à 6, dans lequel, à l'étape e., pour la détermination de la vitesse de rotation de consigne de la machine d'entraînement électrique (4), une vitesse de rotation actuelle de l'arbre de sortie (22) et une modification du rapport de transmission par le deuxième rapport de transmission sont en outre prises en compte.

8. Procédé selon l'une des revendications 1 à 7, dans lequel au moins l'une des étapes b. à e. est exécutée avant l'étape a.

9. Unité de commande (68) pour une machine de travail (4), qui comprend un entraînement de roulement (1), dans laquelle l'entraînement de roulement comprend une machine d'entraînement électrique (4) et un agencement de transmission (3), dans laquelle l'agencement de transmission (3) comprend une boîte de vitesses (6) qui présente au moins deux rapports de transmission (46, 48), dans laquelle la boîte de vitesses est apte à être accouplée ou est accouplée par l'intermédiaire d'un arbre d'entrée (18) à la machine d'entraînement (4), de sorte qu'un couple peut être transmis, et dans laquelle la boîte de vitesses est apte à être reliée ou est reliée par l'intermédiaire d'un arbre de sortie (22) à une sortie de la machine de travail mobile, dans laquelle l'arbre de sortie (22) est apte à être relié ou est relié à au moins une roue à entraîner ou une chaîne ou un essieu à entraîner, dans laquelle l'unité de commande (68) est configurée pour exécuter un procédé selon l'une des revendications 1 à 8.

10. Machine de travail, qui comprend un entraînement de roulement (1), dans laquelle l'entraînement de roulement comprend une machine d'entraînement électrique (4) et un agencement de transmission (3), dans laquelle l'agencement de transmission (3) comprend une boîte de vitesses (6) qui présente au moins deux rapports de transmission (46, 48), dans laquelle la boîte de vitesses est apte à être accouplée ou est accouplée par l'intermédiaire d'un arbre d'entrée (18) à la machine d'entraînement (4), de sorte qu'un couple peut être transmis, et dans laquelle la boîte de vitesses est apte à être reliée ou est reliée par l'intermédiaire d'un arbre de sortie (22) à une sortie de la machine de travail mobile, dans laquelle l'arbre de sortie (22) est apte à être relié ou est relié à au moins une roue à entraîner ou une chaîne ou un essieu à entraîner, dans laquelle la machine de travail comprend une unité de commande selon la revendication 9.

11. Programme d'ordinateur qui est configuré pour exécuter et/ou pour commander le procédé selon l'une des revendications 1 à 8.

12. Support de stockage lisible par machine sur lequel est stocké un programme d'ordinateur selon la revendication 11.
